# EUROPÄISCHE PATENTANMELDUNG

(11) **EP 4 624 053 A1**
(43) Veröffentlichungstag der Anmeldung: **01.10.2025**
(21) Anmeldenummer: 24167251.8
(22) Anmeldetag: 28.03.2024
(51) Int. Cl.: B05B 7/14

(54) **PULVERINJEKTOR MIT SCHNELLKUPPLUNG**

(71) Anmelder: WAGNER INTERNATIONAL AG, 9450 Altstätten (CH)
(72) Erfinder: Schmid, René, 9452 Hinterforst (CH); Breu, Jan, 9413 Oberegg (CH); Lutz, Gilbert, 9451 Kriessen (CH)
(74) Vertreter: Nückel, Thomas

(57) **Zusammenfassung**

Der erfindungsgemässe Pulverinjektor mit Schnellkupplung umfasst ein Injektorgehäuse (5), das einen Pulvereinlass (12) und Zulufteinlässe (5.15, 5.16, 5.17) aufweist und in dem eine Treibdüse (7) und eine Fangdüse (8) angeordnet sind. Zudem umfasst der Pulverinjektor einen Leitungsanschlussblock (6), der Anschlüsse (15, 16, 17) für Zuluftleitungen und der Zuluftauslässe (6.15, 6.16, 6.17) aufweist. Des Weiteren umfasst der Pulverinjektor einen Schnellverschluss (9), mit dem der Leitungsanschlussblock (6) am Injektorgehäuse (5) befestigbar ist und die Zuluftauslässe (6.15, 6.16, 6.17) des Leitungsanschlussblocks (6) mit den Zulufteinlässen (5.15, 5.16, 5.17) des Injektorgehäuses (5) verbindbar sind.

## Beschreibung

### Technisches Gebiet

Die Erfindung betrifft einen Pulverinjektor mit Schnellkupplung.

Um ein Werkstück mit Beschichtungspulver oder kurz Pulver zu beschichten, wird das Pulver aus einem Pulvervorratsbehälter mit einem Pulverförderer zu einer Pulversprühpistole transportiert und dort auf das Werkstück gesprüht. Der Pulverförderer umfasst einen Pulverinjektor, der mit Hilfe von Förderluft einen Unterdruck erzeugt und dadurch das Pulver aus dem Pulvervorratsbehälter saugt. Im Injektor strömt das Gemisch aus Förderluft und Pulver durch eine Fangdüse. Auf der stromabwärtigen Seite der Fangdüse wird dem Pulver-Förderluft-Gemisch zusätzlich Dosierluft beigemischt, um einen definierten Gesamtluftstrom zu erreichen.

### Stand der Technik

Aus der Druckschrift DE 10 2006 018 066 A1 ist ein pneumatisch betriebener Pulverförderer bekannt, mit dem Beschichtungspulver aus einem Pulvervorratsbehälter herausgefördert werden kann. Der Pulverförderer umfasst einen Injektor mit einem Ansaugstutzen für Pulver, einer Treibdüse, einer Fangdüse und einem Pulverauslass. Zudem umfasst der Injektor einen Förderluftanschluss, über den er mit Förderluft versorgt wird und einen Dosierluftanschluss, über den er mit Dosierluft versorgt wird. Mit Hilfe einer Überwurfmutter lässt sich der zum Transport des Pulvers zur Pulversprühpistole notwendige Schlauch anschliessen. Bei dieser Lösung ist kein Fluidisierluftanschluss vorhanden. Um die Fangdüse zu entfernen, muss zuerst die Überwurfmutter gelöst und dann zusammen mit dem Pulverschlauch entfernt werden. Erst dann kann die Fangdüse aus dem Injektorgehäuse herausgezogen werden. Um den Pulverinjektor zu reinigen, ist zuerst die Förderluftleitung vom Förderluftanschluss zu entfernen, dann muss die Dosierluftleitung vom Dosierluftanschluss entfernt werden. Und schliesslich muss die Überwurfmutter gelöst und dann zusammen mit dem Pulverschlauch abgenommen werden. Damit sind relativ viele Handgriffe erforderlich, bis der Injektor so weit vorbereitet ist, dass er gereinigt werden kann.

### Darstellung der Erfindung

Eine Aufgabe der Erfindung ist es, einen Pulverinjektor mit Schnellkupplung anzugeben, bei dem die Zuluftleitungen einfach und schnell an- und abgekoppelt werden können.

Vorteilhafterweise kann bei dem erfindungsgemässen Pulverinjektor die Fangdüse einfach und werkzeuglos aus dem Injektorgehäuse ausgebaut werden.

Ein weiterer Vorteil bei dem erfindungsgemässen Pulverinjektor mit Schnellkupplung ist, dass gleichzeitig mit den Zuluftleitungen auch der Pulverschlauch an den Injektor ankoppelbar oder vom Injektor abkoppelbar ist. Dadurch kann die Reinigungsdauer noch weiter reduziert werden.

Vorteilhafterweise kann bei dem erfindungsgemässen Pulverinjektor ein Farbwechsel besonders schnell vorgenommen werden.

Es reicht, wenn der Leitungsanschlussblock mit Hilfe der Schnellkupplung vom Injektorgehäuse gelöst wird, um auch sämtliche Leitungen (Pulverleitung, Förderluftleitung, Fluidisierluftleitung und/oder Dosierluftleitung) vom Injektorgehäuse abzukoppeln.

Ein weiterer Vorteil der Erfindung ist, dass die Reinigung des Pulverinjektors besonders schnell und einfach erfolgen kann.

Auch die Fangdüse kann mit wenigen Handgriffen und ohne Verwendung von Werkzeug aus dem Pulverinjektor herausgenommen werden.

Ein weiterer Vorteil bei dem erfindungsgemässen Pulverinjektor ist, dass die Schläuche respektive Leitungen (Pulverleitung, Förderluftleitung, Fluidisierluftleitung und Dosierluftleitung) übersichtlich angeordnet sind und der Anlagenbediener auf einen Blick erkennt, ob die Schläuche korrekt angeschlossen sind.

Die Reinigung des Injektors kann manuell oder automatisiert erfolgen. So kann beispielsweise die Pulverlanze automatisch gespült werden. Dazu kann sie in eine Reinigungsstation gebracht werden, wo sie dann automatisch gereinigt wird.

Die Aufgabe wird durch einen Pulverinjektor mit Schnellkupplung mit den in Patentanspruch 1 angegebenen Merkmalen gelöst.

Der erfindungsgemässe Pulverinjektor mit Schnellkupplung umfasst ein Injektorgehäuse, das einen Pulvereinlass und Zulufteinlässe aufweist und in dem eine Treibdüse und eine Fangdüse angeordnet sind. Zudem umfasst der Pulverinjektor einen Leitungsanschlussblock, der Anschlüsse für Zuluftleitungen und der Zuluftauslässe aufweist. Des Weiteren umfasst der Pulverinjektor einen Schnellverschluss, mit dem der Leitungsanschlussblock am Injektorgehäuse befestigbar ist und die Zuluftauslässe des Leitungsanschlussblocks mit den Zulufteinlässen des Injektorgehäuses verbindbar sind.

Vorteilhafte Weiterbildungen der Erfindung ergeben sich aus den in den abhängigen Patentansprüchen angegebenen Merkmalen.

Bei einer Ausführungsform des erfindungsgemässen Pulverinjektors weist der Schnellverschluss eine Schnappverbindung auf. Die Schnappverbindung bietet eine sicherere und stabilere Verbindung durch das Einrasten der Teile.

Bei einer weiteren Ausführungsform des erfindungsgemässen Pulverinjektors umfasst der Schnellverschluss einen selbst rückstellenden Verschlussbügel. Der Verschlussbügel wird, beispielsweise mit einer Feder, in der eingerasteten Position sicher gehalten. Der Schnellverschluss ist resilient gegen Stösse oder Vibrationen oder Rütteln am Pulverinjektor und öffnet nicht selbstständig. Durch die Feder wird der Verschlussbügel in die richtige Endposition gestellt.

Bei einer zusätzlichen Ausführungsform des erfindungsgemässen Pulverinjektors umfasst der Leitungsanschlussblock einen Pulverschlauchanschluss, der den Pulverauslass des Pulverinjektors bildet. Das hat den Vorteil, dass mit dem Leitungsanschlussblock nicht nur die Luftleitungen vom Pulverinjektor entfernt werden können, sondern zugleich auch der Pulverschlauch entfernt werden kann.

Bei einer Weiterbildung des erfindungsgemässen Pulverinjektors ist einer der Anschlüsse des Leitungsanschlussblocks zum Anschluss eines Schlauchs für Förderluft vorgesehen. Die Förderluft wird zum Fördern des Pulvers verwendet.

Bei einer anderen Weiterbildung des erfindungsgemässen Pulverinjektors ist ein weiterer der Anschlüsse des Leitungsanschlussblocks zum Anschluss eines Schlauchs für Dosierluft vorgesehen. Das hat den Vorteil, dass damit in einem Schritt die Förder- und Dosierluftleitung entfernt werden können.

Zudem kann bei dem erfindungsgemässen Pulverinjektor vorgesehen sein, dass ein weiterer der Anschlüsse des Leitungsanschlussblocks zum Anschluss eines Schlauchs für Fluidisierluft vorgesehen ist. Das hat den Vorteil, dass damit mit anderen Zuluftleitungen zugleich auch der Fluidisierluftschlauch entfernt werden kann. Ob die Leitung als Schlauch ausgebildet ist, hängt vom jeweiligen Anwendungsfall ab. Wenn es nicht darauf ankommt, werden Leitung und Schlauch als Synonyme benutzt.

Bei einer zusätzlichen Weiterbildung des erfindungsgemässen Pulverinjektors sind die Anschlüsse auf einer Seite des Leitungsanschlussblocks angeordnet. Das hat den Vorteil, dass damit die Leitungen an derselben Seite angeschlossen und gebündelt weitergeführt werden können. Damit wird das Handling mit den Leitungen beim Anschliessen und beim Entfernen verbessert. Die Leitungen können auch in einem gemeinsamen Schlauch geführt werden. Dadurch sind die Leitungen noch besser vor Verschmutzungen und äusseren Belastungen (Knicken) geschützt.

Bei einer Weiterbildung weist der erfindungsgemässe Pulverinjektor Dichtungen auf, die zwischen den Zuluftauslässen und den Zulufteinlässen angeordnet sind. Damit wird sichergestellt, dass im zusammengebauten Zustand keine Luft aus der Schnittstelle zwischen Injektorgehäuse und Leitungsanschlussblock austreten kann. Eine Undichtheit hätte Einfluss auf den Pulvervolumenstrom des zu fördernden Pulvers.

Bei einer anderen Weiterbildung des erfindungsgemässen Pulverinjektors sind die Dichtungen als radial wirkende Dichtungen ausgebildet. Die radial wirkenden Dichtungen bieten eine bessere Abdichtung gegenüber Druck- und Temperaturbelastungen in radialer Richtung und sind daher noch sicherer gegenüber Undichtheiten. Die radial wirkenden Dichtungen können auch besser montiert werden und werden in einer Nut gehalten.

Zudem kann bei dem erfindungsgemässen Pulverinjektor vorgesehen sein, dass der Leitungsanschlussblock eine Führung und das Injektorgehäuse ein zur Führung passendes Gegenstück aufweisen. Dies hat den Vorteil, dass der Leitungsanschlussblock einfach, sicher und mit der richtigen Orientierung auf das Injektorgehäuse gesteckt werden kann. Damit passen die Luftanschlüsse zueinander.

Bei einer vorteilhaften Weiterbildung weist der erfindungsgemässe Pulverinjektor ein Rückschlagventil auf, das im Injektorgehäuse stromabwärts vom Zulufteinlass angeordnet ist. Mit dem Rückschlagventil kann verhindert werden, dass Pulver in die Zuluftleitung gelangt. Pulver in der Zuluftleitung gilt es zu verhindern, weil das Pulver in der Zuluftleitung die Zuluftleitung verstopfen kann. Wenn das Rückschlagventil nicht vorhanden wäre, könnte Pulver über die Luftleitung bis zu den Regelventilen in der Steuerung gelangen und diese beschädigen.

Bei dem erfindungsgemässen Pulverinjektor kann darüber hinaus vorgesehen sein, dass das Injektorgehäuse ein Gehäuseoberteil, ein Gehäuseunterteil und zumindest ein Verbindungsmittel umfasst, das das Gehäuseoberteil und das Gehäuseunterteil miteinander verbindet. Das Verbindungsmittel bildet auch die Drehachse für den Verschlussbügel und hält den Verschlussbügel.

Das Verbindungsmittel dient vorteilhafterweise dazu, eine lösbare Verbindung herzustellen. Das Verbindungsmittel ist vorzugsweise eine mechanische Verbindung zwischen Gehäuseoberteil und Gehäuseunterteil. Es kann beispielweise eine Schraube oder eine Kombination aus Gewindestift und Mutter sein.

Vorteilhafterweise ist das Injektorgehäuse des erfindungsgemässen Pulverinjektors so ausgebildet, dass die Fangdüse aus dem Injektorgehäuse herausziehbar ist, wenn der Leitungsanschlussblock abgenommen ist. Dies hat den Vorteil, dass die Fangdüse einfach gereinigt und/oder auf Verschleiss überprüft und allenfalls ersetzt werden kann.

Bei einer Ausführungsform des erfindungsgemässen Pulverinjektors ist ein Ansaugrohr vorgesehen, das mit dem Pulvereinlass des Pulverinjektors verbunden ist. Zudem sind ein das Ansaugrohr umgebendes Rohr und eine Fluidisierluftleitung vorgesehen, wobei die Fluidisierluftleitung durch das Injektorgehäuse verläuft und in das Rohr mündet. Dies hat den Vorteil, dass das Ansaugrohr mit dem Pulverinjektor verbunden ist und die Verbindungsstelle nicht gereinigt werden muss. Damit ist die Reinigung des Pulverinjektors noch effizienter.

Bei einer weiteren Ausführungsform des erfindungsgemässen Pulverinjektors weist das Ansaugrohr auslassseitig ein Gewinde und das Injektorgehäuse ein dazu passendes Gegengewinde auf. Das hat den Vorteil, dass das Ansaugrohr ohne zusätzliche Verbindungselemente direkt mit dem Injektorgehäuse sicher verbunden werden kann.

Bei einer zusätzlichen Ausführungsform des erfindungsgemässen Pulverinjektors ist ein Fluidisierring vorhanden, der mit dem Rohr verbunden und dazu vorgesehen ist, Fluidisierluft im Pulvervorrat zu verteilen. Durch den Fluidisierring wird die Fluidisierluft optimal beim Pulvereinlass des Ansaugrohrs verteilt und fluidisiert das Pulver, so dass das Pulver gut über den Pulverinjektor gefördert werden kann.

Schliesslich wird vorgeschlagen den Fluidisierring so auszubilden, dass er das Ansaugrohr gegenüber dem Rohr zentriert. Das hat den Vorteil, dass keine weiteren Bauteile für die Zentrierung benötigt werden. Die Fluidisierluft wird gleichmässig zum Fluidisierring gefördert und verteilt. Die Fluidisierluft wird damit im Bereich des Pulvereinlasses des Ansaugrohrs gleichmässig verteilt und das Pulver optimal fluidisiert.

### Kurze Beschreibung der Zeichnungen

Im Folgenden wird die Erfindung mit mehreren Ausführungsbeispielen anhand von 16 Figuren weiter erläutert.
- Figur 1: zeigt eine erste mögliche Ausführungsform eines Pulverförderers mit einem Pulverinjektor und einer Pulverlanze in einer dreidimensionalen Ansicht.
- Figur 2: zeigt die erste Ausführungsform des Pulverförderers im teilweise zerlegten Zustand in einer dreidimensionalen Ansicht.
- Figur 3: zeigt die erste Ausführungsform des Pulverförderers in einer Explosionsansicht.
- Figur 4: zeigt die erste Ausführungsform des Pulverförderers mit dem Pulverinjektor in der Ansicht von unten.
- Figur 5: zeigt die erste Ausführungsform des Pulverförderers mit dem Pulverinjektor in der Ansicht von oben.
- Figur 6: zeigt die erste Ausführungsform des Pulverförderers in der Seitenansicht.
- Figur 7: zeigt die erste Ausführungsform des Pulverförderers mit Pulverinjektor und Pulverlanze in einem ersten Längsschnitt.
- Figur 8: zeigt die erste Ausführungsform des Pulverförderers in einem zweiten Längsschnitt.
- Figur 9: zeigt die erste Ausführungsform des Pulverförderers in der Ansicht von vorne.
- Figur 10: zeigt die erste Ausführungsform des Pulverförderers in einem dritten Längsschnitt.
- Figur 11: zeigt den Pulverinjektor in einer dreidimensionalen Ansicht, wobei der Leitungsanschlussblock vom Injektorgehäuse abgenommen ist.
- Figur 12: zeigt den Pulverinjektor in der Seitenansicht im zusammengebauten Zustand.
- Figur 13: zeigt den Pulverinjektor mit einer zweiten Ausführungsform des Leitungsanschlussblocks in einer dreidimensionalen Ansicht, wobei der Leitungsanschlussblock vom Injektorgehäuse abgenommen ist.
- Figur 14: zeigt den Pulverinjektor mit der zweiten Ausführungsform des Leitungsanschlussblocks in der Seitenansicht im zusammengebauten Zustand.
- Figur 15: zeigt eine Anlage zur Handbeschichtung in einer dreidimensionalen Ansicht, wobei der Pulverförderer abgesenkt ist.
- Figur 16: zeigt die Anlage zur Handbeschichtung in einer dreidimensionalen Ansicht, wobei der Pulverförderer hochgezogen ist.

### Wege zur Ausführung der Erfindung

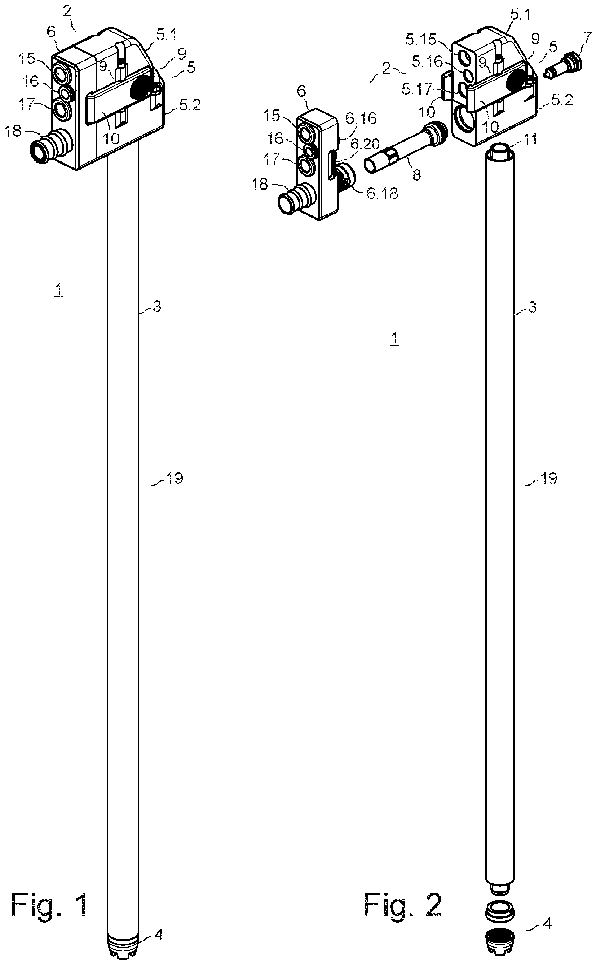

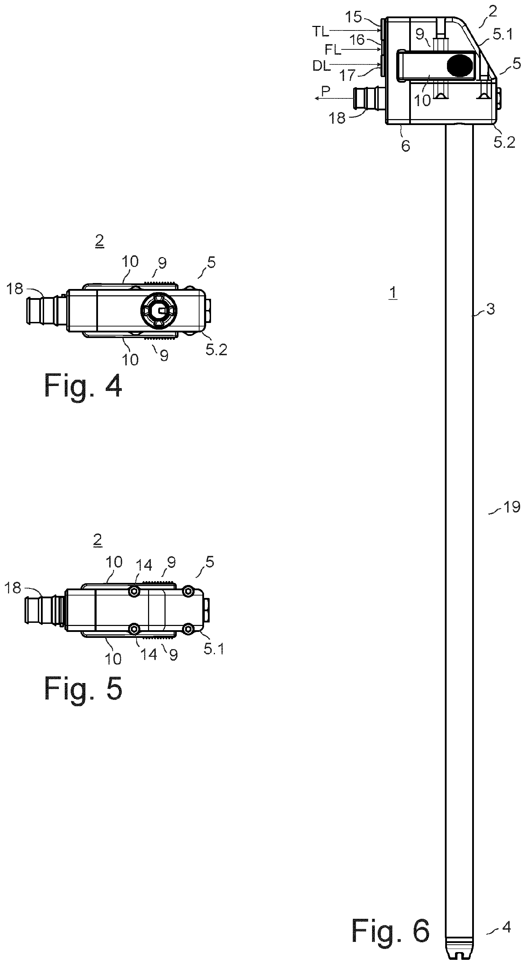

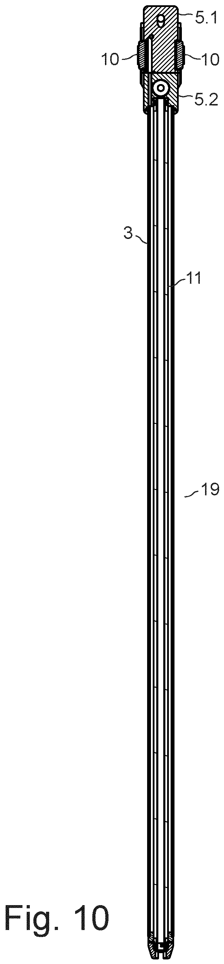

In den Figuren 1 bis 10 ist eine erste mögliche Ausführungsform eines Pulverförderers 1 in verschiedenen Ansichten und in verschiedenen Längsschnitten dargestellt. Der Pulverförderer 1 kann verwendet werden, um Beschichtungspulver zum Beispiel aus einem (in den Figuren nicht gezeigten) Pulverreservoir zu saugen und einem (in den Figuren ebenfalls nicht gezeigten) Pulverapplikator zuzuführen. Das Pulverreservoir kann beispielsweise ein Pulvervorratsbehälter sein. Der Pulvervorratsbehälter kann ein Karton sein, in dem sich ein das Beschichtungspulver enthaltender Plastiksack befindet.

Der Pulverförderer 1 umfasst einen Pulverinjektor 2 oder kurzum Injektor und eine Pulverlanze 19, um das Pulver aus dem Vorratsbehälter zu saugen.

Der Pulverinjektor 2 weist ein Injektorgehäuse 5 auf, das über einen Schnellverschluss 9 mit einem Leitungsanschlussblock 6 verbindbar ist. In Figur 1 ist der Injektor 2 im zusammengebauten Zustand gezeigt. Der Schnellverschluss 9 umfasst einen ersten und einen zweiten Verschlussbügel 10, wobei der erste Verschlussbügel 10 auf der einen Seite des Injektorgehäuses 5 und der zweite Verschlussbügel 10 auf der anderen Seite des Injektorgehäuses 5 angeordnet ist. Die beiden Verschlussbügel 10 sind über jeweils eine Schraube 14 am Injektorgehäuse 5 drehbar befestigt. Statt der Schraube kann auch ein anderes Verbindungsmittel verwendet werden, wie beispielsweise eine Kombination aus Gewindestift und Mutter, wobei der Gewindestift als Drehachse dient.

Beide Verschlussbügel 10 weisen vorne eine Klinke 10.2 auf. Wenn die beiden Verschlussbügel 10 im hinteren Bereich 10.1 zusammengedrückt werden, lösen sich die beiden Klinken 10.2 vom Leitungsanschlussblock 6 und geben diesen frei. Nun kann der Leitungsanschlussblock 6 nach vorne vom Injektorgehäuse 5 abgezogen werden (siehe Figur 2). Vorteilhafterweise ist zum Abnehmen des Leitungsanschlussblocks 6 kein Werkzeug notwendig. Sobald der Leitungsanschlussblock 6 entfernt ist, kann der Anlagenbediener die Fangdüse 8 nach vorne aus dem Injektorgehäuse 5 herausziehen und gegebenenfalls reinigen, auf Verschleiss überprüfen oder allenfalls durch eine neue ersetzen. Vorteilhafterweise ist auch für den Ausbau der Fangdüse 8 kein Werkzeug notwendig. Auch die Befestigung des Leitungsanschlussblocks 6 am Injektorgehäuse 5 erfolgt werkzeuglos. Dazu wird der Leitungsanschlussblock 6 mit leichtem Druck auf das Injektorgehäuse 5 gesteckt, sodass die beiden Klinken 10.2 am Leitungsanschlussblock 6 einrasten. Der Leitungsanschlussblock 6 ist dazu auf beiden Seiten jeweils mit einer Nut 6.20 ausgestattet, in die die Klinke 10.2 des Verschlussbügels 10 eingreift. Auf diese Weise ist der Leitungsanschlussblock 6 formschlüssig mit dem Injektorgehäuse 5 verbunden.

Das Injektorgehäuse 5 weist einen Förderlufteinlass 5.15, einen Fluidisierlufteinlass 5.16 und einen Dosierlufteinlass 5.17 auf. Diese Einlässe werden auch als Zulufteinlässe des Injektorgehäuses bezeichnet. Der Leitungsanschlussblock 6 weist einen Förderluftanschluss 15 und einen Förderluftauslass 6.15 auf; beide sind über einen Kanal miteinander verbunden. Der Leitungsanschlussblock 6 weist zudem einen Fluidisierluftanschluss 16 und einen Fluidisierluftauslass 6.16 auf, wobei der Fluidisierluftanschluss 16 über einen weiteren Kanal mit dem Fluidisierluftauslass 6.16 verbunden ist. Und schliesslich weist der Leitungsanschlussblock 6 noch einen Dosierluftanschluss 17 und einen Dosierluftauslass 6.17 auf, wobei beide über einen zusätzlichen Kanal miteinander verbunden sind. Im zusammengebauten Zustand ist der Förderluftanschluss 15 mit dem Förderlufteinlass 5.15 des Injektorgehäuses, der Fluidisierluftanschluss 16 mit dem Fluidisierlufteinlass 5.16 und der Dosierluftanschluss 17 mit dem Dosierlufteinlass 5.17 verbunden. Der Förderluftauslass 6.15, der Fluidisierluftauslass 6.16 und der Dosierluftauslass 6.17 werden im Folgenden auch als Zuluftauslässe des Leitungsanschlussblocks 6 bezeichnet.

Mit Hilfe des Schnellverschlusses 9 wird nicht nur der Leitungsanschlussblock 6 am Injektorgehäuse 5 befestigt, sondern auch die Zuluftauslässe 6.15, 6.16, 6.17 des Leitungsanschlussblocks 6 werden mit den Zulufteinlässen 5.15, 5.16, 5.17 des Injektorgehäuses 5 verbunden.

Vorteilhafterweise befindet sich im hinteren Bereich 10.1 des Verschlussbügels 10 zwischen dem Verschlussbügel und dem Injektorgehäuse 5 eine Feder 13. Die Feder 13 sorgt dafür, dass der Verschlussbügel 10 dauerhaft unter Spannung gehalten wird. Dadurch bewegt sich die Klinke 10.2 des Verschlussbügels 10 nur dann aus der Nut 6.20 heraus, wenn mit ausreichender Kraft hinten auf den Verschlussbügel 10 gedrückt wird. Dadurch wird sichergestellt, dass sich der Leitungsanschlussblock 6 nicht versehentlich vom Injektorgehäuse 5 löst. Vorteilhafterweise ist der Injektor 2 so aufgebaut, dass beide Verschlussbügel 10 unter Spannung stehen. Dies kann zum Beispiel erreicht werden, indem auf beiden Seiten des Injektorgehäuses 5 jeweils eine Feder 13 zwischen Injektorgehäuse 5 und Verschlussbügel 10 angeordnet ist.

Vorteilhafterweise ist der Schnellverschluss 9 so ausgebildet, dass die beiden Verschlussbügel 10 selbst rückstellendend sind. Dazu kann die Feder 13 vorgesehen sein, die auf den Verschlussbügel 10 drückt, sodass dieser, nachdem er losgelassen wurde, wieder in seine ursprüngliche Lage zurückgedreht wird.

Die Stelle, an der auf den Verschlussbügel 10 zu drücken ist, um den Leitungsanschlussblock 6 freizugeben, kann optisch markiert sein und/oder so ausgebildet sein, dass sie ertastbar ist.

Der Verschlussbügel 10 kann im hinteren Abschnitt 10.1, wo sich der Griffbereich befindet, Rippen aufweisen. Die Rippen verbessern den Halt für die Finger und deuten optisch an, wo der Verschlussbügel zu greifen und zu drücken ist.

Bei einer Ausführungsform sind der Leitungsanschlussblock 6 und das Injektorgehäuse 5 mit einer Führung und einem zur Führung passenden Gegenstück ausgestattet, sodass der Leitungsanschlussblock 6 nur in einer einzigen Position am Injektorgehäuse 5 befestigt werden kann. Dadurch wird die Montage vereinfacht und ein falscher Zusammenbau wird vermieden. Die Führung mit Gegenstück kann zum Beispiel durch eine Hülse im Leitungsanschlussblock 6 und eine dazu passende Bohrung im Injektorgehäuse 5 erzeugt werden. Im montierten Zustand ragt die Hülse in die Bohrung.

Bei der in den Figuren gezeigten Ausführungsform ist das Injektorgehäuse 5 zweiteilig ausgebildet und umfasst ein oberes Injektorgehäuse 5.1 und ein unteres Injektorgehäuse 5.2. Vorteilhafterweise können das obere Injektorgehäuse 5.1 und das untere Injektorgehäuse 5.2 mit Hilfe der beiden Schrauben 14 miteinander verbunden werden. Dies ist unter anderem deshalb vorteilhaft, weil die beiden Schrauben 14 dann mehrere Aufgaben gleichzeitig erfüllen. Zum einen verbinden sie das obere und das untere Injektorgehäuse 5.1 und 5.2 miteinander. Zum anderen halten sie die beiden Verschlussbügel 10 und schliesslich dienen sie auch als Drehachsen für die beiden Verschlussbügel 10.

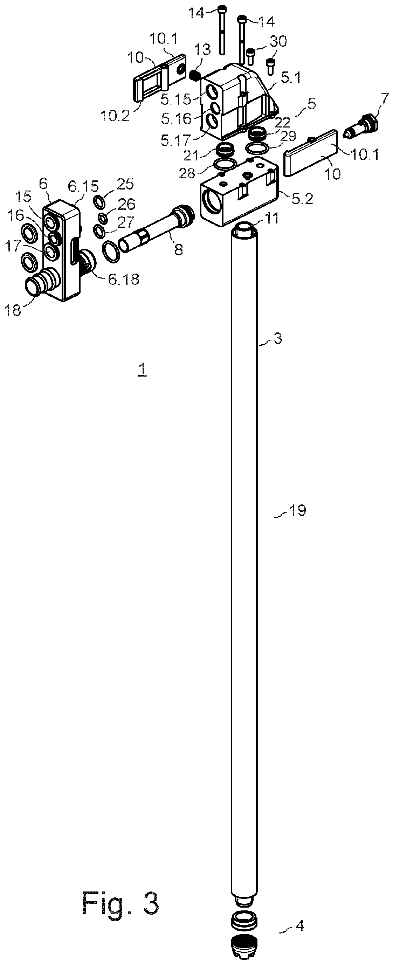

Bei Bedarf können zusätzliche Schrauben 30 vorgesehen sein (siehe Figur 3), um das Gehäuseoberteil 5.1 und das Gehäuseunterteil 5.2 miteinander zu verbinden.

Bei der in den Figuren gezeigten Ausführungsform umfasst der Pulverinjektor 2 neben der Fangdüse 8 auch eine Treibdüse 7, einen Pulvereinlass 12 und einen Pulverschlauchanschluss 18, der den Pulverauslass des Injektors bildet.

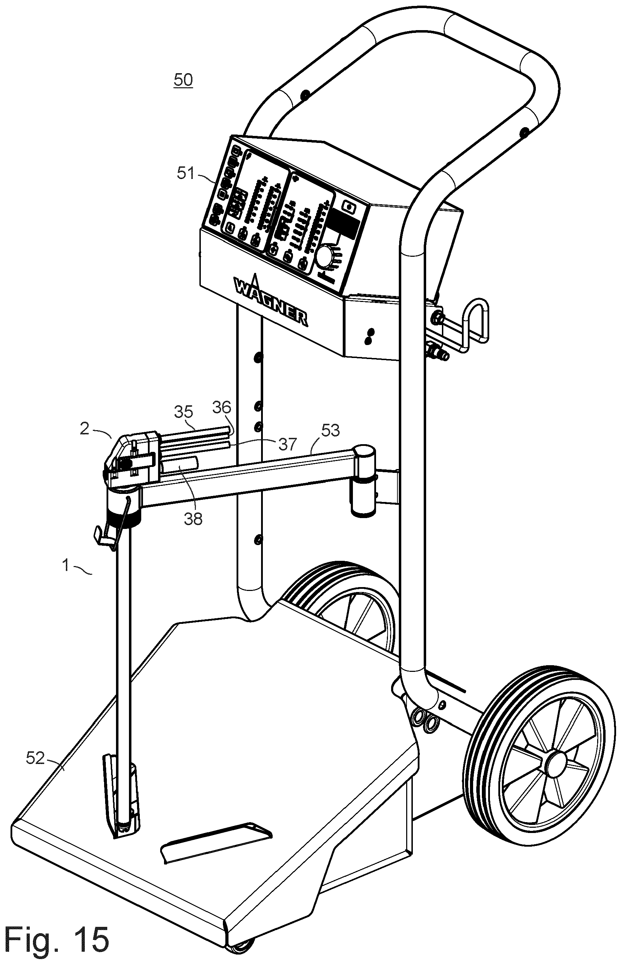

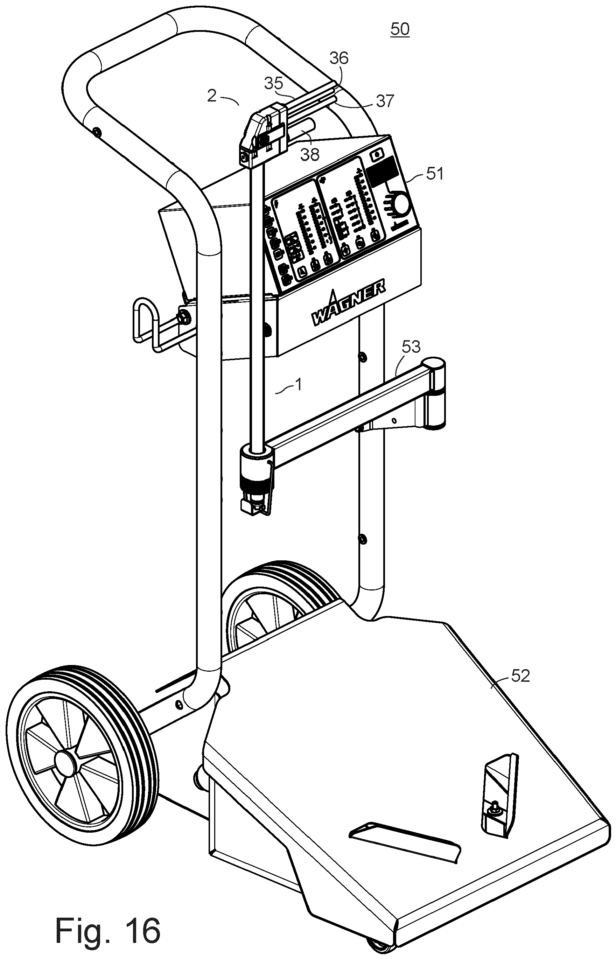

Der Pulvereinlass 12 des Injektors 2 ist mit dem Ansaugrohr 3 zum Beispiel über eine Schraub- oder eine Steckverbindung verbunden. Der Pulverauslass respektive Pulverschlauchanschluss 18 des Injektors 2 ist mit einem Pulverschlauch 38 verbunden (siehe Figuren 15 und 16), über den das mit dem Injektor geförderte Pulver zu einem Sprühapplikator transportiert wird. Über den Förderluftanschluss 15 wird Förderluft TL über einen Kanal 45 zur Treibdüse 7 geleitet. Über den Dosierluftanschluss 17 wird Dosierluft DL über einen Kanal 47 in einen ringförmigen Dosierluftkanal geleitet, welcher durch die äussere Mantelfläche der Fangdüse 8 und das Injektorgehäuse 5 gebildet wird.

Die Treibdüse 7 weist einen Treibdüseneinlass für die Förderluft und an ihrem stromabwärtigen Ende einen Treibdüsenauslass auf. Die Förderluft TL wird vom Förderluftanschluss 15 kommend, durch den Förderluftauslass 6.15, den Förderlufteinlass 5.15 und den Förderluftkanal 45 in die Treibdüse 7 geleitet. Von dort strömt die Förderluft TL durch die Treibdüse 7 und aus dem Treibdüsenauslass in Richtung Fangdüse 8. Während die Förderluft TL zur Fangdüse 8 strömt, erzeugt es im Ansaugrohr 3 einen Unterdruck und saugt so das Pulver durch das Ansaugrohr 3 aus dem Vorratsbehälter.

Die Fangdüse 8 weist an ihrem stromaufwärtigen Ende eine Mündung mit einem definierten Radius auf, durch die das angesaugte Pulver in die Fangdüse 8 strömt. An die Mündung schliesst sich ein Kanalabschnitt an, der als Mischrohr dient. Daran wiederum schliesst sich ein konischer, sich in stromabwärtiger Richtung aufweitender Kanalabschnitt an, der als Diffusor ausgebildet ist. An das stromabwärtige Ende der Fangdüse 8 schliesst sich der Pulverschlauchanschluss 18 an. Der stromaufwärtige Abschnitt der Fangdüse 8 ist im Injektorgehäuse 5 geordnet. Der stromabwärtige Abschnitt der Fangdüse 8 ragt in den Leitungsanschlussblock 6 hinein oder durch ihn hindurch.

Die Dosierluft DL strömt durch den Dosierluftanschluss 17, den Dosierluftauslass 6.17, den Dosierlufteinlass 5.17, den Dosierluftkanal 47 und einen stromabwärtigen Dosierluftauslass in die Pulverleitung 38. Der stromabwärtige Dosierluftauslass befindet sich zwischen der äusseren Mantelfläche der Fangdüse 8 und der Innenseite des Pulverschlauchanschlusses 18. In der Pulverleitung 38 vermischt sich die Dosierluft DL mit aus der Fangdüse 8 strömenden Pulver-Förderluft-Gemisch.

Wie in Figur 3 dargestellt, können zwischen dem oberen Injektorgehäuse 5.1 und dem unteren Injektorgehäuse 5.2 Dichtungen 28 und 29 angeordnet sein, um die Kanäle 45 und 47 nach aussen hin abzudichten. Die Dichtungen 28 und 29 sind vorzugsweise O-Ringe oder andere axial wirkende Dichtungen.

Bei einer Ausführungsform ist im Kanal 47 ein Rückschlagventil 21 angeordnet. Bei einer weiteren Ausführungsform ist im Kanal 45 ein Rückschlagventil 22 angeordnet. Das respektive die beiden Rückschlagventile 21 und 22 sind vorzugsweise mit einem elastischen Teller ausgestattet, der als flexibler Verschluss dient. Die Rückschlagventile 21 und 22 sind in das obere Injektorgehäuse 5.1 eingelegt. Dies ist aber nicht zwingend. Stattdessen können sie auch in das untere Injektorgehäuse 5.2 eingelegt sein.

Das Rückschlagventil 21 verhindert, dass Pulver in die Dosierluftleitung (Zuluftleitung) 47 gelangt. Pulver in der Dosierluftleitung 47 gilt es zu verhindern, denn Pulver, das sich dort ablagert, kann die Dosierluftleitung 47 verstopfen.

Sinngemäss das Gleiche gilt für das Rückschlagventil 22. Es verhindert, dass Pulver in die Förderluftleitung (Zuluftleitung) 45 gelangt. Pulver in der Förderluftleitung 45 gilt es zu verhindern, denn Pulver, das sich dort ablagert, kann sie verstopfen.

Zudem könnte Pulver, wenn die Rückschlagventile 21 und 22 nicht vorhanden wären, über die Luftleitungen bis zu den Regelventilen im Steuergehäuse gelangen und diese beschädigen.

Zwischen dem Injektorgehäuse 5 und dem Leitungsanschlussblock 6 sind vorzugsweise Dichtungen 25, 26 und 27 angeordnet, um die Kanäle 45, 46 und 47 nach aussen hin abzudichten, die die Förderluft TL, die Dosierluft DL und die Fluidisierluft FL führen. Die Dichtungen 25, 26 und 27 sind vorzugsweise als radial wirkende Dichtung ausgebildet. Sie können beispielsweise O-Ringe sein.

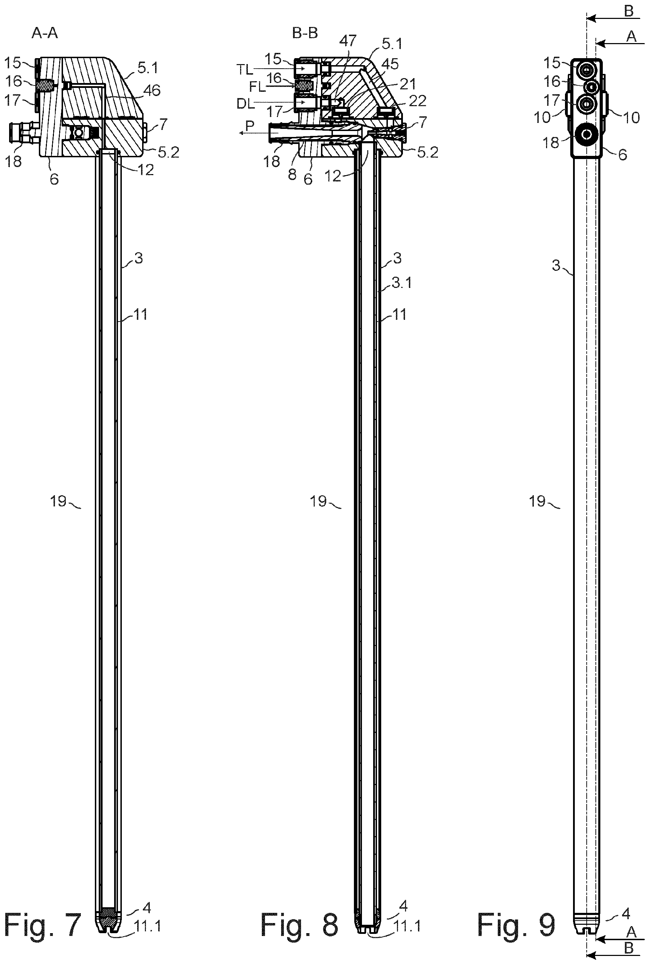

Über den Fluidisierluftanschluss 16 strömt Fluidisierluft FL in den Injektor 2. Die Fluidisierluft FL kann beispielsweise Luft oder Stickstoff sein. Wie in Figur 7 gezeigt, gelangt die Fluidisierluft FL vom Fluidisierluftanschluss 16 über einen Fluidisierluftkanal 46 in die Pulverlanze 19, und zwar in den Zwischenraum zwischen dem Ansaugrohr 11 und dem Rohr 3.

Die Pulverlanze 19 weist einlassseitig einen Fluidisierring 4 auf. Auslassseitig ist das Ansaugrohr 11 der Pulverlanze 19 mit dem Pulvereinlass 12 des Pulverinjektors 2 verbunden.

Das Ansaugrohr 11 wird mit dem Fluidisierring 4 in das Pulverreservoir getaucht und der Fluidisierring 4 mit Fluidisierluft FL versorgt, um das den Fluidisierring 4 umgebende Pulver zu fluidisieren. Das fluidisierte Pulver wird mit Hilfe des Pulverinjektors 2 über das Ansaugrohr 11 aus dem Pulverreservoir herausgesaugt und über einen Pulverschlauch 38 (Figur 15) zu einem Pulverapplikator transportiert.

Der Fluidisierring 4 weist einen Ring aus einem porösen Material auf, das zum Beispiel ein semipermeables, für Luft durchlässiges Material sein kann. Der Fluidisierring 4 kann zum Beispiel aus POM, Metall oder gesintertem PE hergestellt sein. Um den Fluidisierring 4 gegen Stösse zu schützen, kann auf seiner Unterseite ein Schutzring angeordnet sein. Das im Bereich des Fluidisierrings 4 befindliche Pulver wird mit der durch den Fluidisierring 4 hindurchgeleiteten Fluidisierluft FL in einen fliessfähigen Zustand gebracht, was als fluidisieren bezeichnet wird. Das Ansaugrohr 11 weist unterhalb des Fluidisierrings 4 eine Ansaugöffnung 11.1 auf, durch die das fluidisierte Pulver aus dem Vorratsbehälter herausgesaugt werden kann. Um die Fluidisierluft FL steuern zu können, kann die Handanlage 50 eine Steuerung 51 aufweisen.

Der Fluidisierring 4 kann so ausgebildet sein, dass er die Lage des Ansaugrohrs 3 in Bezug auf das umgebende Rohr 11 definiert.

Das Ansaugrohr 11 ist vorzugsweise vernickelt. Dies hat den Vorteil, dass es aufgrund der Nickelbeschichtung leichter reinigbar ist.

Die Pulverlanze 19 wird vorzugsweise so weit in den Pulvervorratsbehälter abgesenkt, dass sich der Fluidisierring 4 im unteren Bereich des Pulvervorratsbehälters befindet. Auf diese Weise wird das Pulver im unteren Bereich des Vorratsbehälters fluidisiert und verhindert, dass das Pulver oben über die Öffnung im Vorratsbehälter austritt und die Umgebung verschmutzt.

Das Ansaugrohr 11 ist im Rohr 3 angeordnet. Dadurch entsteht zwischen dem Rohr 3 und dem Ansaugrohr 11 ein Kanal 3.1, der dazu dient die Fluidisierluft FL nach unten zum Fluidisierring 4 zu leiten. Der Kanal 3.1 wird auch als Fluidisierluftkanal bezeichnet.

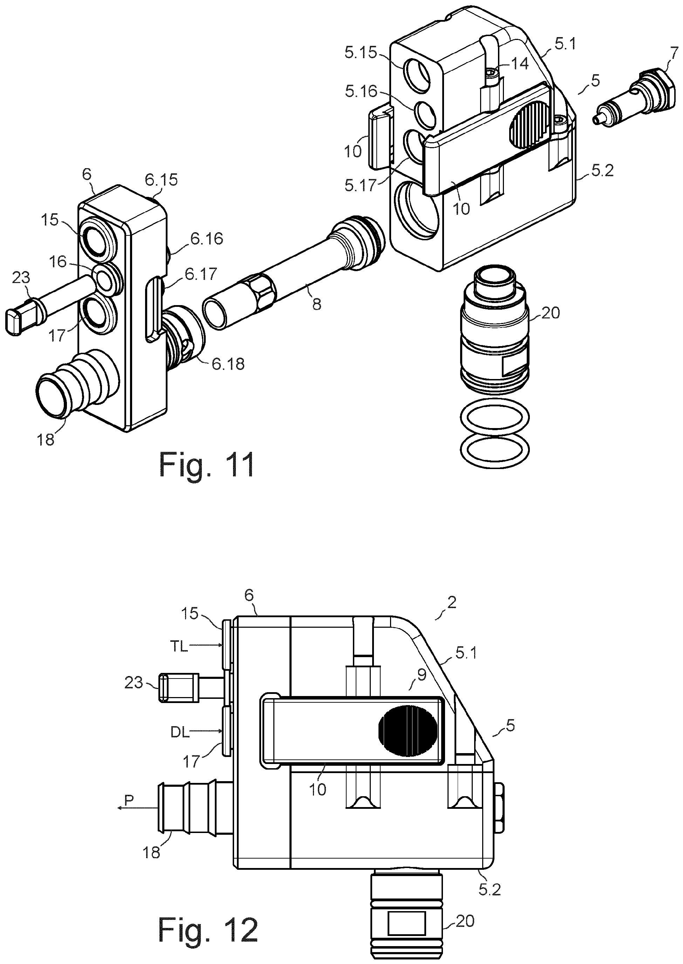

Wie in den Figur 11 und 12 dargestellt, kann auf der Einlassseite des Injektors 2 ein Adapter 20 vorgesehen sein, der zwischen dem Injektorgehäuse 5 und dem Ansaugrohr 3 angeordnet ist. Der Adapter 20 ist insbesondere dann von Vorteil, wenn der Injektor 2 zum Beispiel für einen 60 Liter Pulverbehälter verwendet wird (in den Figuren nicht gezeigt). Beim 60 Liter Pulverbehälter wird die Fluidisierluftleitung direkt an der Seite des Pulverbehälterbodens angeschlossen und die Fluidisierluft FL von dort in den Pulverbehälter geführt. Die Fluidisierluft FL wird also in diesem Fall nicht über den Injektor 2 geführt. Beim 60 Liter Pulverbehälter weist der Deckel des Pulverbehälters einen Adapteranschluss auf. Auf der Unterseite des Adapteranschlusses ist das Ansaugrohr 3 mit dem Adapteranschluss verbunden. Auf seiner Oberseite ist der Adapteranschluss mit dem Adapter 20 verbindbar. Über den Adapteranschluss kann der Adapter 20 und damit mit der Injektor 2 einfach montiert und entfernt werden.

Falls keine Fluidisierluft FL verwendet werden soll, kann der Fluidisierluftanschluss 16 mit einem Stöpsel 23 verschlossen werden (siehe Figuren 11 und 12).

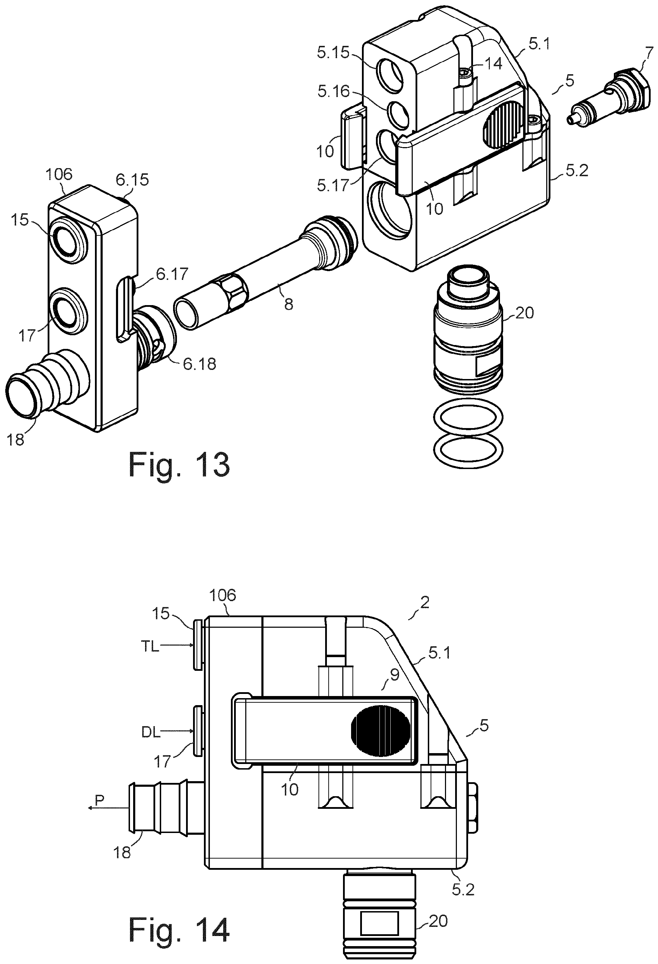

Stattdessen kann auch ein leicht veränderter Leitungsanschlussblock 106 verwendet werden (siehe Figuren 13 und 14). Der Leitungsanschlussblock 106 weist, anders als der Leitungsanschlussblock 6, keinen Fluidisierluftanschluss auf. Ansonsten ist der Leitungsanschlussblock 106 baugleich mit dem Leitungsanschlussblock 6.

Die in den Figuren 15 und 16 dargestellte Handanlage 50 ist mit einer Abstellfläche 52 ausgestattet, auf der der Pulvervorratsbehälter abgestellt werden kann.

Zudem kann die Handanlage 50 eine Rüttelvorrichtung mit einem Rüttelmotor aufweisen (in den Figuren nicht zu sehen), um die Abstellfläche 52 und damit den Vorratsbehälter in Schwingung versetzen zu können. Dadurch kann ein noch homogeneres Pulver-Luft-Gemisch im Vorratsbehälter erzeugt werden.

Der Pulverförderer 1 wird an einem Haltearm 53 gehalten. Er kann mit Hilfe des Haltearms 53 über den Pulvervorratsbehälter geschwenkt und in den Behälter abgesenkt werden.

An den Förderluftanschluss 15 kann eine Förderluftleitung 35 und an den Dosierluftanschluss 17 eine Dosierluftleitung 37 angeschlossen sein. Es kann vorgesehen sein, dass die Förderluftleitung 35 und die Dosierluftleitung 37 in einem Schlauch angeordnet sind. Dadurch kann der Reinigungsaufwand noch weiter reduziert werden, weil nicht mehr sowohl die Förderluftleitung 35 als auch die Dosierluftleitung 36, sondern nur noch der Schlauch zu reinigen ist.

Der Injektor kann mit Luft oder anderen Gasen betrieben werden. Das Gas kann Luft oder Stickstoff sein. Die Förderluft, die Dosierluft und/oder die Fluidisierluft kann also Luft oder ein anderes Gas sein. Der Einfachheit halber wird lediglich von Luft gesprochen.

Die vorhergehende Beschreibung der Ausführungsbeispiele gemäss der vorliegenden Erfindung dient nur zu illustrativen Zwecken. Selbstverständlich sind verschiedene Änderungen und Modifikationen möglich. So sind beispielsweise die verschiedenen in den Figuren 1 bis 16 gezeigten Komponenten des Pulverförderers und der Handanlage auch auf eine andere als in den Figuren gezeigte Weise miteinander kombinierbar.

### Bezugszeichenliste

- 1: Pulverförderer
- 2: Pulverinjektor
- 3: Rohr
- 3.1: Fluidisierluftkanal
- 4: Fluidisierring
- 5: Injektorgehäuse
- 5.1: oberes Injektorgehäuse / Gehäuseoberteil
- 5.2: unteres Injektorgehäuse / Gehäuseunterteil
- 5.15: Zulufteinlass / Einlass für Förderluft
- 5.16: Zulufteinlass / Einlass für Fluidisierluft
- 5.17: Zulufteinlass / Einlass für Dosierluft
- 6: Leitungsanschlussblock
- 6.15: Zuluftauslass / Auslass für Förderluft
- 6.16: Zuluftauslass / Auslass für Fluidisierluft
- 6.17: Zuluftauslass / Auslass für Dosierluft
- 6.18: Pulvereinlass
- 6.20: Nut
- 7: Treibdüse
- 8: Fangdüse
- 9: Schnellverschluss
- 10: Verschlussbügel
- 10.1: hinterer Abschnitt des Verschlussbügels
- 10.2: Klinke
- 11: Ansaugrohr
- 11.1: Ansaugöffnung
- 12: Pulvereinlass
- 13: Feder
- 14: Schraube
- 15: Förderluftanschluss
- 16: Fluidisierluftanschluss
- 17: Dosierluftanschluss
- 18: Pulverschlauchanschluss
- 19: Pulverlanze
- 20: Adapter
- 21: Rückschlagventil
- 22: Rückschlagventil
- 23: Stöpsel
- 25: Dichtung
- 26: Dichtung
- 27: Dichtung
- 28: Dichtung
- 29: Dichtung
- 30: Schrauben
- 35: Schlauch für Förderluft
- 36: Schlauch für Fluidisierluft
- 37: Schlauch für Dosierluft
- 38: Pulverschlauch
- 45: Förderluftkanal
- 46: Fluidisierluftkanal
- 47: Dosierluftkanal
- 50: Handanlage
- 51: Steuerung
- 52: Abstellfläche
- 53: Haltearm
- 106: Leitungsanschlussblock
- FL: Fluidisierluft
- DL: Dosierluft
- TL: Förderluft
- P: Pulver

## Patentansprüche

1. Pulverinjektor mit Schnellkupplung,
- mit einem Injektorgehäuse (5), das einen Pulvereinlass (12) und Zulufteinlässe (5.15, 5.16, 5.17) aufweist und in dem eine Treibdüse (7) und eine Fangdüse (8) angeordnet sind,
- mit einem Leitungsanschlussblock (6), der Anschlüsse (15, 16, 17) für Zuluftleitungen und der Zuluftauslässe (6.15, 6.16, 6.17) aufweist, und
- mit einem Schnellverschluss (9), mit dem der Leitungsanschlussblock (6) am Injektorgehäuse (5) befestigbar ist und die Zuluftauslässe (6.15, 6.16, 6.17) des Leitungsanschlussblocks (6) mit den Zulufteinlässen (5.15, 5.16, 5.17) des Injektorgehäuses (5) verbindbar sind.

2. Pulverinjektor nach Patentanspruch 1,
bei dem der Schnellverschluss (9) eine Schnappverbindung aufweist.

3. Pulverinjektor nach Patentanspruch 1 oder 2,
bei dem der Schnellverschluss (9) einen selbst rückstellenden Verschlussbügel (10) umfasst.

4. Pulverinjektor nach einem der Patentansprüche 1 bis 3,
bei dem der Leitungsanschlussblock (6) einen Pulverschlauchanschluss (18) umfasst, der den Pulverauslass des Pulverinjektors (2) bildet.

5. Pulverinjektor nach einem der Patentansprüche 1 bis 4,
bei dem einer der Anschlüsse (15) des Leitungsanschlussblocks (6) zum Anschluss eines Schlauchs für Förderluft (35) vorgesehen ist.

6. Pulverinjektor nach einem der Patentansprüche 1 bis 5,
bei dem ein weiterer der Anschlüsse (17) des Leitungsanschlussblocks (6) zum Anschluss eines Schlauchs für Dosierluft (37) vorgesehen ist.

7. Pulverinjektor nach einem der Patentansprüche 1 bis 6,
bei dem ein weiterer der Anschlüsse (16) des Leitungsanschlussblocks (6) zum Anschluss eines Schlauchs für Fluidisierluft (36) vorgesehen ist.

8. Pulverinjektor nach einem der Patentansprüche 1 bis 7,
bei dem die Anschlüsse (15, 16, 17) auf einer Seite des Leitungsanschlussblocks (6) angeordnet sind.

9. Pulverinjektor nach einem der Patentansprüche 1 bis 8,
mit Dichtungen (25, 26, 27) zwischen den Zuluftauslässen (6.15, 6.16, 6.17) und den Zulufteinlässen (5.15, 5.16, 5.17).

10. Pulverinjektor nach Patentanspruch 9,
bei dem die Dichtungen (25, 26, 27) als radial wirkende Dichtungen ausgebildet sind.

11. Pulverinjektor nach einem der Patentansprüche 1 bis 10,
bei dem der Leitungsanschlussblock (6) eine Führung und das Injektorgehäuse (5) ein zur Führung passendes Gegenstück aufweisen.

12. Pulverinjektor nach einem der Patentansprüche 1 bis 11,
mit einem Rückschlagventil (21; 22), das im Injektorgehäuse (5) stromabwärts vom Zulufteinlass (5.15; 5.17) angeordnet ist.

13. Pulverinjektor nach einem der Patentansprüche 3 bis 12,
- bei dem das Injektorgehäuse (5) ein Gehäuseoberteil (5.1) und ein Gehäuseunterteil (5.2) umfasst, und
- mit einem Verbindungsmittel, das das Gehäuseoberteil (5.1) und das Gehäuseunterteil (5.2) miteinander verbindet, die die Drehachse für den Verschlussbügel (10) bildet und die den Verschlussbügel (10) hält.

14. Pulverinjektor nach Patentanspruch 13,
bei dem das Verbindungsmittel als Schraube (14) ausgebildet ist.

15. Pulverinjektor nach einem der Patentansprüche 1 bis 14,
bei dem das Injektorgehäuse (5) so ausgebildet ist, dass die Fangdüse (8) aus dem Injektorgehäuse (5) herausziehbar ist, wenn der Leitungsanschlussblock (6) abgenommen ist.

16. Pulverförderer mit einem Pulverinjektor nach einem der Patentansprüche 1 bis 15,
- mit einem Ansaugrohr (11), das mit dem Pulvereinlass (12) des Pulverinjektors (2) verbunden ist,
- mit einem das Ansaugrohr (11) umgebenden Rohr (3), und
- mit einer Fluidisierluftleitung (46), die durch das Injektorgehäuse (5) verläuft und die in das Rohr (3) mündet.

17. Pulverförderer nach Patentanspruch 16,
bei dem das Ansaugrohr (11) auslassseitig ein Gewinde und das Injektorgehäuse (5) ein dazu passendes Gegengewinde aufweist.

18. Pulverförderer nach Patentanspruch 16 oder 17,
mit einem Fluidisierring (4), der mit dem Rohr (3) verbunden und dazu vorgesehen ist, Fluidisierluft im Pulvervorrat zu verteilen.

19. Pulverförderer nach einem der Patentansprüche 16 bis 18,
bei dem der Fluidisierring (4) das Ansaugrohr (11) gegenüber dem Rohr (3) zentriert.
